(19) Europäisches Patentamt
European Patent Office
Office européen des brevets

(11) **EP 4 525 390 A1**

(12) **EUROPEAN PATENT APPLICATION**
published in accordance with Art. 153(4) EPC

(43) Date of publication:
**19.03.2025 Bulletin 2025/12**

(21) Application number: **23842120.0**

(22) Date of filing: **04.07.2023**

(51) International Patent Classification (IPC):
**H04L 41/0896** *(2022.01)*

(52) Cooperative Patent Classification (CPC):
**H04L 41/0896; H04L 69/16**

(86) International application number:
**PCT/CN2023/105716**

(87) International publication number:
**WO 2024/017055 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.07.2022 CN 202210871221**

(71) Applicant: **ZTE Corporation**
**Shenzhen, Guangdong 518057 (CN)**

(72) Inventors:
• **MIAO, Ting**
  **Shenzhen, Guangdong 518057 (CN)**
• **LU, Youxiong**
  **Shenzhen, Guangdong 518057 (CN)**
• **CHEN, Jie**
  **Shenzhen, Guangdong 518057 (CN)**
• **XING, Weimin**
  **Shenzhen, Guangdong 518057 (CN)**

(74) Representative: **Aipex B.V.**
**Vestdijk 51**
**5611 CA Eindhoven (NL)**

(54) **METHOD FOR DETERMINING SIZE OF TRANSPORT BLOCK, TERMINAL DEVICE AND STORAGE MEDIUM**

(57) Provided are a method for determining a size of a transport block, a user equipment and a storage medium. The method includes the following: Frequency domain parameter indication information is determined; the total number of resource elements allocated to a physical sidelink shared channel is determined according to the frequency domain parameter indication information; and the size of the transport block is determined according to the total number of resource elements.

EP 4 525 390 A1

```
┌─────────────────────────────────────────────────────────────┐
│ Determine frequency domain parameter indication information   │──110
└─────────────────────────────────────────────────────────────┘
                              │
                              ▼
┌─────────────────────────────────────────────────────────────┐
│ Determine a total number of resource elements allocated to a  │
│ physical sidelink shared channel according to the frequency   │──120
│ domain parameter indication information                       │
└─────────────────────────────────────────────────────────────┘
                              │
                              ▼
┌─────────────────────────────────────────────────────────────┐
│ Determine the size of the transport block according to the    │──130
│ total number of resource elements                             │
└─────────────────────────────────────────────────────────────┘
```

**FIG. 2**

**Description**

TECHNICAL FIELD

The present application relates to the field of communication technology, in particular, a method for determining a size of a transport block, a user equipment and a storage medium.

BACKGROUND

For sidelink (SL) communication on licensed frequency bands, one or more SL resource pools are configured within a bandwidth part (BWP). An SL resource pool contains multiple consecutive resource blocks (RBs) in the frequency domain. These resource blocks are sequentially divided into one or more subchannels. Each subchannel contains the same number of RBs. SL resource allocation is performed based on subchannels within the resource pool, and each SL transmission occupies one or more consecutive subchannels in the frequency domain.

For SL communication on unlicensed frequency bands, sometimes a guard band may be used, sometimes not. Consequently, changes in the availability of the guard band may lead to changes in the total number of resource blocks available for a physical sidelink shared channel (PSSCH). Therefore, during determination of the size of a transport block (TB), the guard band may need to be taken into account. As a result, how to determine the size of a transport block when a user equipment (UE) is operating in an unlicensed frequency band is a problem that needs to be addressed.

SUMMARY

The present application provides a method for determining the size of a transport block, a user equipment and a storage medium.

Embodiments of the present application provide a method for determining the size of a transport block. The method includes the following.

Frequency domain parameter indication information is determined.

The total number of resource elements allocated to a physical sidelink shared channel is determined according to the frequency domain parameter indication information.

The size of the transport block is determined according to the total number of resource elements.

Embodiments of the present application also provide a user equipment. The user equipment includes a memory, a processor, and a computer program stored in the memory and executable by the processor. When executing the computer program, the processor performs the preceding method for determining the size of a transport block.

Embodiments of the present application also provide a computer-readable storage medium for storing a computer program that, when executed by a processor, causes the processor to perform the preceding method for determining the size of a transport block.

BRIEF DESCRIPTION OF DRAWINGS

FIG. 1 is a diagram illustrating a carrier, a bandwidth part, and a resource pool according to an embodiment.

FIG. 2 is a flowchart of a method for determining the size of a transport block according to an embodiment.

FIG. 3 is a diagram illustrating the structure of an apparatus for determining the size of a transport block according to an embodiment.

FIG. 4 is a diagram illustrating the hardware structure of a user equipment according to an embodiment.

DETAILED DESCRIPTION

Embodiments of the present application are described hereinafter in detail in conjunction with drawings. It is to be noted that if not in collision, embodiments of the present application and features therein may be combined with each other in any manner.

Procedures illustrated in flowcharts among the drawings may be executed by, for example, a computer system capable of executing a set of computer-executable instructions. Moreover, although logical sequences are illustrated in the flowcharts, the procedures illustrated or described may be performed in sequences different from those described herein in some cases.

For sidelink (SL) communication on licensed frequency bands, one or more SL resource pools are configured within a bandwidth part (BWP). An SL resource pool contains multiple consecutive resource blocks in the frequency domain. These resource blocks are sequentially divided into one or more subchannels. Each subchannel contains the same number of RBs. SL resource allocation is performed based on subchannels within the resource pool, and each SL transmission occupies one or more consecutive subchannels in the frequency domain.

For SL communication on unlicensed frequency bands, one or more SL resource pools are configured within a BWP. A resource pool may contain one or more resource block sets (RB sets), and typically, a guard band is reserved between adjacent resource block sets to avoid interference between transmissions on different resource block sets. Subchannels within a resource pool may or may not contain a resource block in the guard band. When adjacent resource block sets are idle (that is, the adjacent resource block sets are not occupied by other devices), higher resource utilization can be achieved by using adjacent resource block sets and the guard band between the adjacent resource block sets compared to using only the resources within the resource block sets. When a user equipment (UE) uses a resource block set, adjacent resource block sets may be occupied by other devices, especially by devices from other systems. To avoid interference between adjacent resource block sets, the guard band is typically not used. During data transmissions between devices, it is necessary to determine the size of a transport block (TB), that is, the amount of data carried on time-frequency resources. The number of resources allocated for data transmission may affect the size of the TB. For one data transmission, the size of the initially transmitted transport block must be the same as the size of a re-transmitted transport block for successful combined decoding. Therefore, when a UE operates in an unlicensed frequency band, how to determine the size of the transport block is a problem that needs to be solved.

For a carrier with specific subcarrier spacing, the UE may be configured with N - 1 guard bands (GBs). Each guard band is defined by a starting common resource block (CRB) and the number of CRBs (that is, the size of the guard band). These N - 1 guard bands divide the carrier into N resource block sets. For a carrier, a bandwidth part (BWP) contains an integer number of resource block sets. The starting resource block of the BWP $N_{BWP}^{start}$ is equal to $RB_{s0}^{start}$ and the bandwidth of the BWP $N_{BWP}^{size}$ is equal to $RB_{s1}^{end} - RB_{s0}^{start} + 1$, where $RB_{s0}^{start}$ denotes the starting resource block of resource block set s0, $RB_{s1}^{end}$ denotes the ending resource block of resource block set s1, and $0 \leq s0 \leq s1 \leq N - 1$.

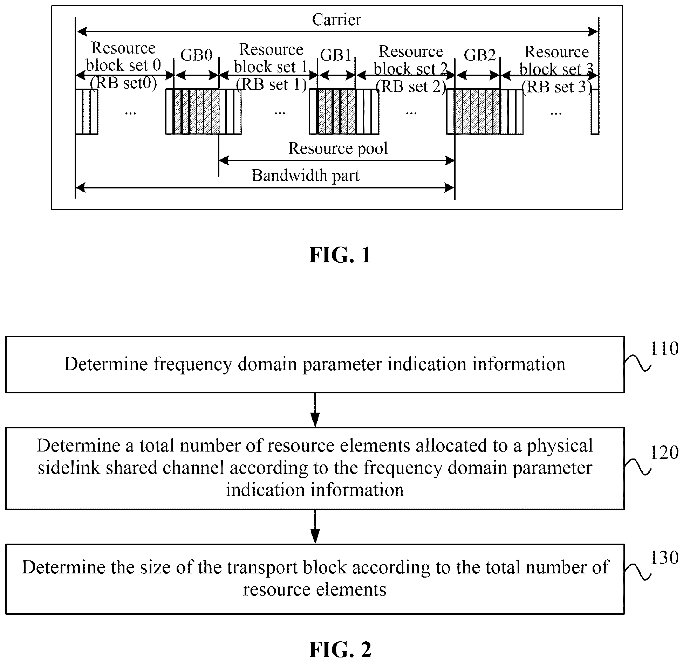

Generally, the BWP is configured based on the carrier, and the resource pool is configured within the BWP. FIG. 1 is a diagram illustrating a carrier, a bandwidth part, and a resource pool according to an embodiment. As shown in FIG. 1, the carrier contains four RB sets, the BWP contains three RB sets, and the resource pool contains two RB sets. The present application does not exclude the possibility of configuring the resource pool based on the carrier.

Typically, sidelink control information (SCI) in new radio sidelink (NR SL) includes first-stage SCI (such as SCI format 1-A) and second-stage SCI (such as SCI format 2-A, SCI format 2-B, and SCI format 2-C). The first-stage SCI is carried on a physical sidelink control channel (PSCCH), and the PSCCH resources are usually located within the first subchannel allocated to the physical sidelink shared channel (PSSCH). The second-stage SCI is carried on the PSSCH. If SL enables hybrid automatic repeat request (HARQ) feedback, some slots in an SL resource pool may have physical sidelink feedback channel (PSFCH) resources, while some time slots in the SL resource pool may not have a PSFCH resource. Therefore, when the size of a TB is calculated for SL, the PSFCH, the first-stage SCI, and the second-stage SCI are usually taken into consideration.

When NR SL operates in a licensed frequency band, the size of a transport block is typically determined using the following method:

First, the UE determines the number $N_{RE}^{'}$ of resource elements (RE) allocated to the PSSCH in one physical resource block (PRB) in the following manner:

$$N_{RE}^{'} = N_{sc}^{RB}(N_{symb}^{sh} - N_{symb}^{PSFCH}) - N_{oh}^{PRB} - N_{RE}^{DMRS}.$$

In the formula, $N_{sc}^{RB}$ denotes the number of subcarriers in one PRB; $N_{symb}^{sh} = $ sl-LengthSymbols - 2, and sl-LengthSymbols denotes the number of sidelink (SL) symbols in a slot provided by a higher layer; $N_{symb}^{PSFCH}$ denotes a PSFCH overhead. If the PSFCH period is 2 or 4, and PSFCH overhead indication information in SCI format 1-A indicates "1", $N_{symb}^{PSFCH} = 3$; otherwise, $N_{symb}^{PSFCH} = 0$. If the PSFCH period is 0, $N_{symb}^{PSFCH} = 0$. If the PSFCH period is 1,

$N^{PSFCH}_{symb} = 3$ . $N^{PRB}_{on}$ denotes an overhead provided by higher-layer parameter *sl-X-Overhead*; $N^{DMRS}_{RE}$ denotes a demodulation reference signal (DMRS) overhead determined according to higher-layer parameter *sl-PSSCH-DMRS-TimePatternList*, and the DMRS overhead is described in Table 1.

Table 1

| sl-PSSCH-DMRS-TimePatternList | $N^{DMRS}_{RE}$ |
|---|---|
| {2} | 12 |
| {3} | 18 |
| {4} | 24 |
| {2, 3} | 15 |
| {2, 4} | 18 |
| {3, 4} | 21 |
| {2, 3, 4} | 18 |

Then, the UE determines the total number $N_{RE}$ of REs allocated to the PSSCH in the following manner:

$$N_{RE} = N'_{RE} \cdot n_{PRB} - N^{SCI,1}_{RE} - N^{SCI,2}_{RE}.$$

In the formula, $n_{PRB}$ denotes the total number of PRBs allocated to the PSSCH; $N^{SCI,1}_{RE}$ denotes the total number of REs occupied by the PSCCH and the PSCCH DMRS; $N^{SCI,2}_{RE}$ denotes the number of coded modulation symbols generated by transmission of the second-stage SCI. Assuming that $\gamma = 0$, $\gamma$ denotes the number of idle REs in the resource block to which the last coded symbol of the second-stage SCI belongs.

Finally, the UE determines the size of the TB transmitted by the PSSCH according to the total number $N_{RE}$ of REs allocated to the PSSCH, the target code rate of the PSSCH, the modulation order of the PSSCH, the number of transmission layers of the PSSCH, and the like.

However, when NR SL operates in an unlicensed frequency band, the guard band may or may not be used sometimes. Consequently, changes in the availability of the guard band may lead to changes in the total number of PRBs available for the PSSCH. Therefore, when determining the size of a TB, the guard band may need to be taken into account.

To solve the preceding technical problems, embodiments of the present application provide a method for determining the size of a transport block. FIG. 2 is a flowchart of a method for determining the size of a transport block according to an embodiment. As shown in FIG. 2, the method provided by this embodiment includes operations 110, 120, and 130.

In 110, frequency domain parameter indication information is determined.

In this embodiment, the frequency domain parameter indication information may be understood as information used for indicating a frequency domain parameter. The frequency domain parameter indication information may be determined by the user equipment (UE) according to sidelink control information (SCI) or other information. Since NR SL may need to consider the guard band when operating in an unlicensed frequency band, the frequency domain parameter indication information may be used for indicating whether to consider information such as a guard band overhead.

In 120, the total number of resource elements allocated to a physical sidelink shared channel is determined according to the frequency domain parameter indication information.

In this embodiment, the frequency domain parameter may be indicated according to the frequency domain parameter indication information, and the total number of resource elements allocated to the physical sidelink shared channel (PSSCH) may be determined according to the frequency domain parameter. This embodiment does not limit the method of determining the total number of resource elements.

In 130, the size of the transport block is determined according to the total number of resource elements.

In this embodiment, the size of the transport block may be determined according to the total number of resource elements or according to the total number of resource elements and a channel parameter of the physical sidelink shared channel. This embodiment does not limit the method of determining the size of the transport block.

In this embodiment, frequency domain parameter indication information is determined; the total number of resource elements allocated to a physical sidelink shared channel is determined according to the frequency domain parameter indication information; and the size of the transport block is determined according to the total number of resource elements. In this manner, it is possible to consider the changes in the total number of PRBs available for the PSSCH due to the changes in the availability of the guard band when the size of the TB is determined. This method is applicable to the case of determining the size of the TB when the NR SL operates in an unlicensed frequency band.

In an embodiment, determining the total number of resource elements allocated to the physical sidelink shared channel according to the frequency domain parameter indication information includes the following:

A frequency domain parameter is determined according to the frequency domain parameter indication information.

The total number of resource elements allocated to the physical sidelink shared channel is determined according to the frequency domain parameter.

In this embodiment, the corresponding frequency domain parameter may be determined according to the frequency domain parameter indication information, and the total number of resource elements allocated to the physical sidelink shared channel may be determined according to the frequency domain parameter. This embodiment does not limit the method for determining the total number of resource elements allocated to the physical sidelink shared channel according to the frequency domain parameter.

In an embodiment, determining the total number of resource elements allocated to the physical sidelink shared channel according to the frequency domain parameter and a target overhead includes the following:

The total number of resource elements allocated to the physical sidelink shared channel is determined according to the frequency domain parameter and a target overhead.

The target overhead includes the number of resource elements occupied by target control information carried on the physical sidelink shared channel and/or the number of resource elements for rate matching on the physical sidelink shared channel.

The target control information includes at least one of the following: hybrid automatic repeat request feedback information, channel occupancy time information, channel state information, beam report information, or beam configuration information.

In this embodiment, when the total number of resource elements allocated to the physical sidelink shared channel is determined according to the frequency domain parameter, other overheads, such as the target overhead $N_x$, may also be considered. The target overhead includes the number of resource elements (REs) occupied by the target control information carried on the physical sidelink shared channel (PSSCH) and/or the number of resource elements (REs) for rate matching on the physical sidelink shared channel (PSSCH).

The target control information includes at least one of the following: hybrid automatic repeat request (HARQ) feedback information, channel occupancy time (COT) information, channel state information, beam report information, or beam configuration information.

When the target overhead $N_x$ is considered, the target overhead $N_x$ is subtracted from the total number of REs allocated to the PSSCH, and this total number is determined without considering the target overhead $N_x$.

In an embodiment, the frequency domain parameter indication information includes at least one of the following: guard band overhead indication information, indication information about whether to consider the guard band overhead, frequency domain unit size indication information, or available additional resource indication information.

The frequency domain parameter includes at least one of the following: the guard band overhead, a frequency domain unit size, or an available additional resource.

In this embodiment, the guard band overhead indication information may be understood as information that can indicate the guard band overhead; the indication information about whether to consider the guard band overhead may be understood as information that can indicate whether the guard band overhead is considered; the frequency domain unit size indication information may be understood as information that can indicate the size of a frequency domain unit; and the additional resource indication information may be understood as information that can indicate available additional resources.

Accordingly, the frequency domain parameter determined according to the frequency domain parameter indication information includes the guard band overhead, the frequency domain unit size, and the available additional resource.

In an embodiment, the guard band overhead indication information is configured to indicate one guard band overhead in a configured guard band overhead group or indicate one guard band overhead in a target guard band overhead group among a preset group number of guard band overhead groups.

The target guard band overhead group is a group of guard band overheads determined from the preset group number of guard band overhead groups according to the number of frequency domain resources across resource block sets and allocated to the physical sidelink shared channel.

The preset group number is determined according to the number of resource block sets contained in a resource pool or the number of guard bands contained in the resource pool.

In this embodiment, if one guard band overhead group exists, the guard band overhead indication information may be used for indicating one guard band overhead in the guard band overhead group. If at least one (which may be the preset group number of) guard band overhead group exists, the guard band overhead indication information may be used for indicating one guard band overhead in the target guard band overhead group within the preset group number of guard band overhead groups.

The preset group number for the guard band overhead may be determined according to the number of resource block sets (RB sets) contained in the resource pool or the number of guard bands contained in the resource pool. Then, one guard band overhead group is determined from the preset group number of guard band overhead groups as the target guard band overhead group according to the number of frequency domain resources across resource block sets and allocated to the physical sidelink shared channel.

In an embodiment, if the resource pool contains one RB set, $N_{RB}^{GB} = 0$. That is, the guard band overhead is a fixed value of 0, so the number of bits of a guard band overhead indication field is 0, in other words, the guard band overhead does not need to be indicated; if the resource pool contains multiple RB sets, the bit length of the guard band overhead indication field is not 0. For example, the guard band overhead indication information is carried on the PSCCH, and the guard band overhead indication information contains B bits, where B bits indicate the guard band overhead.

In an embodiment, determining the frequency domain parameter according to the frequency domain parameter indication information includes at least one of the following:

The guard band overhead is determined according to the guard band overhead indication information.

If the indication information about whether to consider the guard band overhead indicates that the guard band overhead is considered, the guard band overhead is determined by a preset method. If the indication information about whether to consider the guard band overhead indicates that the guard band overhead is not considered, the guard band overhead is determined as zero.

The size of a frequency domain unit is determined according to the frequency domain unit size indication information.

An available additional resource is determined according to the available additional resource indication information.

In this embodiment, the corresponding frequency domain parameter may be determined according to any one of the frequency domain parameter indication information. This embodiment does not limit the methods of determining the guard band overhead according to the guard band overhead indication information, determining the size of a frequency domain unit according to the frequency domain unit size indication information, and determining the available additional resource according to the available additional resource indication information.

The indication information about whether to consider the guard band overhead is used for indicating whether to consider the guard band overhead. If the indication information about whether to consider the guard band overhead indicates that the guard band overhead is considered, the guard band overhead needs to be considered when the size of the transport block is determined, and the guard band overhead may be determined by a preset method, such as configuration, pre-configuration, or pre-definition. If the indication information about whether to consider the guard band overhead indicates that the guard band overhead is not considered, the guard band overhead does not need to be considered when the size of the transport block is determined, and the guard band overhead may be considered to be zero.

In an embodiment, determining the guard band overhead according to the guard band overhead indication information includes any one of the following: determining the guard band overhead according to a value indicated by the guard band overhead indication information; determining the guard band overhead according to the guard band overhead indication information and whether a subchannel in a resource pool contains a resource block in a guard band; or determining the guard band overhead according to the guard band overhead indication information and whether the number of resource blocks contained in a subchannel in a resource pool exceeds a threshold.

In this embodiment, there are multiple methods for determining the guard band overhead.

In an example embodiment, the guard band overhead is determined according to the value indicated by the guard band overhead indication information. The guard band overhead may include a first preset bit, and the guard band overhead is determined according to the value indicated by the first preset bit. For example, the value indicated by the first preset bit or the opposite of the value indicated by the first preset bit is determined as the guard band overhead.

In another example embodiment, the guard band overhead is determined according to the guard band overhead indication information and whether the subchannel in the resource pool contains the resource block in the guard band. The guard band overhead may include a second preset bit. If the subchannel in the resource pool includes an RB in the guard band, first information indicated by the second preset bit is used as the guard band overhead; if the subchannel in the resource pool does not include RBs in the guard band, second information indicated by the second preset bit is used as the guard band overhead. The first information and the second information may be the value of an item in one guard band overhead group and the opposite of the value of the item. Alternatively, the first information and the second information may be the value of an item in the first guard band overhead group and the value of one item in the second guard band overhead group among two guard band overhead groups.

In another example embodiment, the guard band overhead is determined according to the guard band overhead indication information and whether a subchannel in a resource pool is allowed to contain a resource block in a guard band. The guard band overhead may include a third preset bit. If the subchannel in the resource pool is allowed to include an RB in the guard band, third information indicated by the third preset bit is used as the guard band overhead; if the subchannel in the resource pool is not allowed to include RBs in the guard band, fourth information indicated by the third preset bit is used as the guard band overhead. The third information and the fourth information may be the value of an item in one guard band overhead group and the opposite of the value of the item. Alternatively, the third information and the fourth information may be the value of one item in the first guard band overhead group and the value of one item in the second guard band overhead group among two guard band overhead groups.

In another example embodiment, the guard band overhead is determined according to the guard band overhead indication information and whether the number of resource blocks contained in the subchannel in the resource pool exceeds the threshold. For example, according to whether the number of RBs contained in the subchannel in the resource pool exceeds the threshold, it is determined whether the value indicated by the guard band overhead or the opposite of the value indicated by the guard band overhead is the guard band overhead, or whether the value of an item in one guard band overhead group or the opposite of the value is the guard band overhead, or whether the value of an item in the first guard band overhead group or the value of an item in the second guard band overhead group among two guard band overhead groups is the guard band overhead.

It can be understood that the number of bits included in the first preset bit, second preset bit, and third preset bit in the preceding example embodiments may be determined according to the number of items in one guard band overhead group to be indicated by the guard band overhead indication information or may be determined in other manners, such as configuration, pre-configuration, or pre-definition. The present application does not impose a limitation herein. The preceding examples are only for explanatory purposes and are not limitations on how to determine the guard band overhead according to the guard band overhead indication information.

In an embodiment, determining the frequency domain parameter indication information includes determining the frequency domain parameter indication information provided by sidelink control information.

The sidelink control information is first-stage sidelink control information carried on the physical sidelink control channel or second-stage sidelink control information carried on the physical sidelink shared channel.

In this embodiment, the frequency domain parameter indication information is provided by the sidelink control information (SCI). For example, the frequency domain parameter indication information may be determined by the UE on the sending side according to the sidelink control information. Alternatively, the UE on the sending side may send the SCI containing the frequency domain parameter indication information to a UE on the receiving side, and the UE on the receiving side determines the frequency domain parameter indication information according to the sidelink control information received from the UE on the sending side. The SCI may be the first-stage SCI carried on the PSCCH or the second-stage SCI carried on the PSSCH.

In an embodiment, the method also includes the following:

First indication information is determined by a preset method. The first indication information is configured to indicate whether the frequency domain parameter indication information is enabled.

In an embodiment, at least one of the following is further included.

When the first indication information indicates that the frequency domain parameter indication information is enabled, the sidelink control information includes the frequency domain parameter indication information.

When the first indication information indicates that the frequency domain parameter indication information is not enabled, the sidelink control information does not include the frequency domain parameter indication information.

In this embodiment, in the case where the first indication information indicates that the frequency domain parameter indication information is enabled, the bit length of the frequency domain parameter indication field in the SCI is a specific bit length, that is, the bit length of the frequency domain parameter indication field corresponding to the frequency domain parameter indication information is not zero. In other words, the sidelink control information includes the frequency domain parameter indication information, and the frequency domain parameter may be determined according to the frequency domain parameter indication information contained in the sidelink control information. For example, the bit length (that is, the specific bit length) of the frequency domain parameter indication field corresponding to the frequency domain parameter indication information may be determined in the following manner: The bit length of each indication field corresponding to each piece of indication information is determined according to the total number of items that can be indicated by each piece of indication information in the frequency domain parameter indication information, and the sum of bit lengths of all indication fields may be understood as the bit length of the frequency domain parameter indication field. For example, the frequency domain parameter indication information only includes the guard band overhead indication information, and the guard band overhead indication information indicates one guard band overhead from X guard band overheads (that is, X is the total number of items that the guard band overhead indication information can indicate). Assuming that the bit length of the guard band overhead indication field corresponding to the guard band overhead indication information is L, then $L = ceil(\log_2^X)$. Therefore, in the case where the frequency domain parameter indication information only includes the guard band overhead indication information, the bit length of the guard band overhead indication field is the bit length of the frequency domain parameter indication field corresponding to the frequency domain parameter indication information. For another example, the frequency domain parameter indication information includes the guard band overhead indication information and the frequency domain unit size indication information, the guard band overhead indication information indicates one guard band overhead from X guard band overheads, and the frequency domain unit size indication information indicates one frequency domain unit size from Y frequency domain unit sizes. Assuming that the bit length of the guard band overhead indication field corresponding to the guard band overhead indication information is L 1, and the bit length of the frequency domain unit size indication field corresponding to the frequency domain unit size indication information is L2, then, $L1 = ceil(\log_2^X)$ and $L2 = ceil(\log_2^Y)$. Therefore, in the case where the frequency domain parameter indication information includes the guard band overhead indication information and the frequency domain unit size indication information, the frequency domain parameter indication field corresponding to the frequency domain parameter indication information includes two fields, that is, the guard band overhead indication field and the frequency domain unit size indication field. The bit length L of the frequency domain parameter indication field may be understood as the sum of the bit lengths of these two fields, that is,

$$L = ceil(\log_2^X) + ceil(\log_2^Y)$$.

In the case where the first indication information indicates that the frequency domain parameter indication information is not enabled, the bit length of the frequency domain parameter indication field in the SCI is 0, that is, the bit length of the frequency domain parameter indication field corresponding to the frequency domain parameter indication information is zero. In other words, the sidelink control information does not include the frequency domain parameter indication information, and the total number of resource elements allocated to the PSSCH cannot be determined according to the frequency domain parameter indication information included in the sidelink control information. Therefore, it is necessary to determine the total number of resource elements allocated to the PSSCH in other manners.

In an embodiment, the method also includes the following:

In the case where the first indication information indicates that the frequency domain parameter indication information is not enabled, the total number of resource elements allocated to the physical sidelink shared channel is determined by using one of the following methods:

A frequency domain parameter is determined by a preset method, and the total number of resource elements allocated to the physical sidelink shared channel is determined according to the frequency domain parameter.

Alternatively, the total number of resource elements allocated to the physical sidelink shared channel is determined according to the total number of physical resource blocks allocated to the physical sidelink shared channel.

In this embodiment, when the first indication information indicates that the frequency domain parameter indication information is not enabled, the total number of resource elements allocated to the PSSCH cannot be determined according to the frequency domain parameter indication information contained in the sidelink control information, and the total number of resource elements allocated to the PSSCH may be determined by any of the following two manners:

The first manner includes determining the frequency domain parameter by a preset method and determining the total number of resource elements allocated to the physical sidelink shared channel according to the frequency domain parameter. It should be noted that the difference between this manner and the case where the first indication information indicates that the frequency domain parameter indication information is enabled is as follows: The method of determining the frequency domain parameter is different. In the case where the frequency domain parameter indication information is enabled, the frequency domain parameter may be determined by the frequency domain parameter indication information contained in the sidelink control information; in the case where the frequency domain parameter indication information is not enabled, the frequency domain parameter needs to be determined by a preset method, and the preset method may include at least one of pre-definition, configuration through higher layer signaling, or pre-configuration by a higher layer entity. The method for determining the total number of resource elements allocated to the PSSCH according to the frequency domain parameters may be the same.

The second manner includes determining the total number of resource elements allocated to the physical sidelink shared channel according to the total number of physical resource blocks allocated to the physical sidelink shared channel. The difference between this manner and the case where the first indication information indicates that the frequency domain parameter indication information is enabled is that the total number of resource elements allocated to the PSSCH does not need to be determined according to the frequency domain parameter, but is determined according to the total number of physical resource blocks (PRBs) allocated to the PSSCH.

In an embodiment, the method also includes the following:

Second indication information is determined by a preset method; the second indication information is configured to indicate whether the use of a resource block in a guard band is allowed.

In an embodiment, in the case where a subchannel is not allowed to include a resource block in a guard band, the method also includes at least one of the following:

When the second indication information indicates that the use of the resource block in the guard band is not allowed, the number of available additional resources is set to zero.

When the second indication information indicates that the use of the resource block in the guard band is allowed, an available additional resource is determined according to the frequency domain parameter indication information or a preset method.

In this embodiment, in the case where the subchannel is not allowed to include the resource block in the guard band, the available additional resource may be set to zero if the second indication information indicates that the use of the resource block in the guard band is not allowed. In the case where the subchannel is not allowed to include the resource block in the guard band, the available additional resource may be determined according to the frequency domain parameter indication information or the preset method if the second indication information indicates that the use of the resource block in the guard band is allowed. The preset method may include at least one of pre-definition, configuration through higher layer signaling, or pre-configuration by a higher layer entity.

In an embodiment, in the case where a subchannel is not allowed to include a resource block in a guard band, the method also includes at least one of the following:

The guard band overhead is set to zero.

The frequency domain unit size is determined according to the frequency domain parameter indication information or a preset method.

In this embodiment, in the case where the subchannel is not allowed to include the resource block in the guard band, the guard band overhead is set to zero. The frequency domain unit size may be determined according to the frequency domain parameter indication information or the preset method. For example, in the case where the frequency domain parameter indication information is enabled, the frequency domain unit size is determined according to the frequency domain unit size indication information in the frequency domain parameter indication information; in the case where the frequency domain parameter indication information is not enabled, the frequency domain unit size is determined according to at least one preset method of pre-definition, configuration through higher layer signaling, or pre-configuration by a higher layer entity.

In an embodiment, in the case where a subchannel is allowed to include a resource block in a guard band, the method may also include at least one of the following:

The guard band overhead is determined according to the frequency domain parameter indication information or a preset method.

An available additional resource is set to zero.

In this embodiment, in the case where the subchannel is allowed to include the resource block in the guard band, the available additional resource is set to zero. The guard band overhead may be determined according to the frequency domain parameter indication information or a preset method. For example, in the case where the frequency domain parameter indication information is enabled, the guard band overhead is determined according to the guard band overhead indication information in the frequency domain parameter indication information; in the case where the frequency domain parameter indication information is not enabled, the guard band overhead is determined according to at least one preset method of pre-definition, configuration through higher layer signaling, or pre-configuration by a higher layer entity.

In an embodiment, the preset method includes at least one of the following: pre-definition, configuration through higher layer signaling, or pre-configuration by a higher layer entity.

In an embodiment, the granularity of configuration and pre-configuration includes a carrier, a bandwidth part, or a resource pool.

In an embodiment, determining the size of the transport block according to the total number of resource elements includes the following:

The size of the transport block is determined according to the total number of resource elements and a channel parameter of the physical sidelink shared channel.

The channel parameter includes at least one of the following: a target code rate, a modulation order, and the number of transmission layers.

In this embodiment, the method of determining the size of the transport block according to the total number of resource elements is not limited.

The following is an exemplary description of the method for determining the size of a transport block through multiple embodiments.

In an embodiment, the frequency domain parameter indication information includes guard band overhead indication information, a guard band overhead is determined according to the guard band overhead indication information, and the total number of REs allocated to the PSSCH is determined according to the determined guard band overhead.

In this embodiment, the guard band overhead indication information is used for indicating the guard band overhead $N_{RB}^{GB}$. The value range of the guard band overhead $N_{RB}^{GB}$ may be set as needed. In an example embodiment, $N_{RB}^{GB}$ may be an integer, a non-negative integer, or a positive integer. In another example embodiment, the guard band overhead $N_{RB}^{GB}$ may be configured to be greater than or equal to 0, or less than or equal to 0 through higher layer signaling; alternatively, the guard band overhead $N_{RB}^{GB}$ may be determined to be greater than or equal to 0, or less than or equal to 0 according to whether a subchannel in a resource pool contains an RB in the guard band; alternatively, the guard band overhead $N_{RB}^{GB}$ may be determined to be greater than or equal to 0, or less than or equal to 0 according to whether the subchannel in the resource pool is allowed to contain an RB in the guard band; alternatively, the guard band overhead $N_{RB}^{GB}$ may be determined to be greater than or equal to 0, or less than or equal to 0 according to whether the number of RBs contained in the subchannel exceeds a threshold.

In this embodiment, the guard band overhead indication information may also be used for indicating one guard band overhead in a configured guard band overhead group or indicating one guard band overhead in a target guard band overhead group in a preset group number of guard band overhead groups. The target guard band overhead group is a guard band overhead group determined from the preset group number of guard band overhead groups according to the number of frequency domain resources across resource block sets and allocated to the physical sidelink shared channel. The preset group number is determined according to the number of resource block sets contained in the resource pool or the number of guard bands contained in the resource pool.

In an example, the guard band overhead indication information is used for indicating one guard band overhead in a configured guard band overhead group, and the guard band overhead $N_{RB}^{GB}$ is an integer. Determining the guard band overhead according to the guard band overhead indication information may include at least the following three cases:

In case one, the guard band overhead indication information is carried in the PSCCH, and the guard band overhead indication information includes B bits; the value indicated by the B bits or the opposite of the value indicated by the B bits may be determined as the guard band overhead by a preset method such as configuration, pre-configuration, or pre-definition. The value indicated by the B bits is used as the guard band overhead. For example, B = 3, 000 indicates that the guard band overhead is 0, 001 indicates that the guard band overhead is 1, 010 indicates that the guard band overhead is 2, ... and 111 indicates that the guard band overhead is 7. Alternatively, the opposite of the value indicated by the B bits is used as the guard band overhead. For example, B = 3, 000 indicates that the guard band overhead is 0, 001 indicates that the guard band overhead is -1, 010 indicates that the guard band overhead is -2, ... and 111 indicates that the guard band overhead is -7.

In case two, the guard band overhead indication information is carried in the PSCCH, and the guard band overhead indication information contains B bits; the value indicated by the B bits plus a constant C is used as the guard band overhead; the value of the constant C may be determined by a preset method such as configuration, pre-configuration, or pre-definition. For example, C = -2, B = 3, 000 indicates that the guard band overhead is -2, 001 indicates that the guard band overhead is -1, 010 indicates that the guard band overhead is 0, ... and 111 indicates that the guard band overhead is 5 (that is, 7 - 2 = 5).

In case three, for one guard band overhead group determined by a preset method such as configuration, pre-configuration, or pre-definition, the guard band overhead indication information may include $ceil(\log_2^X)$ bits, and these $ceil(\log_2^X)$ bits are used for indicating one item in the guard band overhead group, where X is the number of items (that is, the number of guard band overheads) contained in one guard band overhead group, and ceil() indicates rounding up. For example, a guard band overhead group is {-6, -4, -2, 0, 2, 4, 6}, containing 7 guard band overheads, that is, X = 7, so the guard band overhead indication information includes three ( $ceil(\log_2^X) = 3$ ) bits, and a value of these bits are used for indicating one item in {-6, -4, -2, 0, 2, 4, 6}. Bits of 000 indicate that the guard band overhead is -6, bits of 001 indicate that the guard band overhead is -4, and so on, and bits of 110 indicate that the guard band overhead is 6.

The three cases given in the preceding examples are only for a better understanding of the solutions in the present application. The final communication protocol may adopt a method corresponding to one of the cases or determine which method of the case to adopt according to the configuration or pre-configuration method. In other examples, one or more cases are similarly presented, but these cases in the examples should not limit the final communication protocol to adopting any particular case, a combination of these cases, or any other cases.

In another example, the guard band overhead indication information is used for indicating one guard band overhead in a configured guard band overhead group, and the value of the guard band overhead $N_{RB}^{GB}$ is related to whether the subchannel in the resource pool contains an RB in the guard band. Determining the guard band overhead according to the guard band overhead indication information and whether a subchannel in a resource pool contains a resource block in a guard band may include at least the following three cases:

In case one, the guard band overhead indication information is carried in the PSCCH, and the guard band overhead indication information contains B bits; if the subchannel in the resource pool contains the RB in the guard band, the value indicated by the B bits is the guard band overhead; if the subchannel in the resource pool does not contain the RB in the guard band, the opposite of the value indicated by the B bits is the guard band overhead. For example, B = 3, if the subchannel in the resource pool contains the RB in the guard band, 000 indicates that the guard band overhead is 0, 001 indicates that the guard band overhead is 1, 010 indicates that the guard band overhead is 2, ... and 111 indicates that the guard band overhead is 7; if the subchannel in the resource pool does not contain the RB in the guard band, 000 indicates that the guard band overhead is 0, 001 indicates that the guard band overhead is -1, 010 indicates that the guard band overhead is -2, ... and 111 indicates that the guard band overhead is -7.

In case two, for a guard band overhead group determined by a preset method such as configuration, pre-configuration, or pre-definition, the guard band overhead indication information includes $ceil(\log_2^X)$ bits; if the subchannel in the resource pool contains the RB in the guard band, one item in the guard band overhead group indicated by the $ceil(\log_2^X)$ bits is the guard band overhead; if the subchannel in the resource pool does not contain the RB in the guard band, the opposite of one item in the guard band overhead group indicated by the $ceil(\log_2^X)$ bits is the guard band overhead, where X is the number of items contained in the guard band overhead group, and ceil() indicates rounding up. For example, a guard band overhead group is {0, 2, 4, 6}, containing 4 items, that is, X = 4, so the guard band overhead indication information contains ( $ceil(\log_2^X) = 2$ ) bits, and the value of the bits is used for indicating one item of {0, 2, 4, 6}. If the subchannel in the resource pool contains the RB in the guard band, bits of 00 indicate that the guard band overhead is 0, bits of 01 indicate that the guard band overhead is 2, bits of 10 indicate that the guard band overhead is 4, and bits of 11 indicate that the guard band overhead is 6. If the subchannel in the resource pool does not contain the RB in the guard band, bits of 00 indicate that the guard band overhead is 0, bits of 01 indicate that the guard band overhead is -2, bits of 10 indicate that the guard band overhead is -4, and bits of 11 indicate that the guard band overhead is -6.

In case three, for a guard band overhead group determined by a preset method such as configuration, pre-configuration, or pre-definition, the guard band overhead indication information includes $ceil(\log_2^X)$ bits; if the subchannel in the resource pool contains the RB in the guard band, this guard band overhead group is a first group of values, and the guard band overhead indication information indicates one item in the first group of values as the guard band overhead; if the subchannel in the resource pool does not contain the RB in the guard band, this guard band overhead group is a second group of values, and the guard band overhead indication information indicates one item in the second group of values as the guard band overhead. X is the number of items contained in this guard band overhead group. It should be noted that the number of items contained in the first group of values and the second group of values may be the same or different. For example, the first group of values is {0, 2, 4, 6}, and the second group of values is {-12, -10, -8, -6, -4, -2, 0}. If the subchannel in the resource pool contains the RB in the guard band, the guard band overhead group is {0, 2, 4, 6}, so the guard band overhead indication information contains 2 bits, and the value of the bits is used for indicating one item of {0, 2, 4, 6}. If the subchannel in the resource pool does not contain the RB in the guard band, the guard band overhead group is {-12, -10, -8, -6, -4, -2, 0}, so the guard band overhead indication information contains 3 bits, and the value of the bits is used for indicating one item of {-12, -10, -8, -6, -4, -2, 0}.

In another example, the guard band overhead indication information is used for indicating one guard band overhead in a configured guard band overhead group, and the value of the guard band overhead $N_{RB}^{GB}$ is related to whether the subchannel in the resource pool is allowed to contain the RB in the guard band. The guard band overhead is determined according to the guard band overhead indication information and whether the subchannel in the resource pool is allowed to contain the RB in the guard band, the cases included in this example are similar to the cases included in the preceding example "determining the guard band overhead according to the guard band overhead indication information and whether a subchannel in a resource pool contains a resource block in a guard band". It is only necessary to replace "the subchannel in the resource pool contains the RB in the guard band" in the preceding example with "the subchannel in the resource pool is allowed to contain the RB in the guard band" and replace "the subchannel in the resource pool does not contain the RB in the guard band" with "the subchannel in the resource pool is not allowed to contain the RB in the guard band".

In another example, the guard band overhead indication information is used for indicating one guard band overhead in a configured guard band overhead group, and the value of the guard band overhead $N_{RB}^{GB}$ is related to whether the number of resource blocks contained in the subchannel in the resource pool exceeds a threshold. Determining the guard band overhead according to the guard band overhead indication information and whether the number of resource blocks contained in the subchannel in the resource pool exceeds the threshold also includes at least three cases. The three cases included in determining the guard band overhead according to the guard band overhead indication information and whether the number of resource blocks contained in the subchannel in the resource pool exceeds the threshold are similar to the three cases included in determining the guard band overhead according to the guard band overhead indication information and whether the subchannel in the resource pool contains the resource block in the guard band. It is only necessary to replace "the subchannel in the resource pool contains the RB in the guard band" with "the number of RBs contained in the subchannel exceeds the threshold" and replace "the subchannel in the resource pool does not contain the RB in the guard band" with "the number of RBs contained in the subchannel does not exceed the threshold". The threshold may be determined according to a preset method such as configuration, pre-configuration, or pre-definition, which is not repeated in this embodiment.

In this embodiment, in the case where the frequency domain parameter indication information includes the guard band overhead indication information, the guard band overhead may be determined according to the guard band overhead indication information, and the method for determining the total number of resource elements allocated to the physical sidelink shared channel according to frequency domain parameter is as follows:

$$N_{RE} = N_{RE}^{'} \cdot (n_{PRB}^{'} - N_{RB}^{GB}) - N_{RE}^{SCI,1} - N_{RE}^{SCI,2}.$$

$N_{RE}$ denotes the total number of REs allocated to the PSSCH, $N_{RB}^{GB}$ denotes the guard band overhead, $N_{RE}^{'}$ denotes the number of REs allocated to the PSSCH in one PRB, $n_{PRB}^{'}$ denotes the reference total number of PRBs, and $N_{RE}^{SCI,1}$ and $N_{RE}^{SCI,2}$ denote the numbers of REs occupied by the first-stage SCI and the second-stage SCI, respectively (the detailed meaning is as described above). $n_{PRB}^{'}$ may be determined according to the total number of PRBs allocated to the PSSCH or the frequency domain unit size.

In another example, the guard band overhead indication information is used for indicating one guard band overhead in a target guard band overhead group among the preset group number of guard band overhead groups.

In this embodiment, the preset group number L ($L \geq 1$) for the guard band overhead is configured, pre-configured, or predefined, and the preset group number L is determined according to the number of resource block sets contained in the resource pool or the number of guard bands contained in the resource pool; the target guard band overhead group is a group of guard band overheads determined from the preset group number of guard band overhead groups according to the number of frequency domain resources across resource block sets and allocated to the physical sidelink shared channel.

In case one, the preset group number for the guard band overhead is determined according to the number of resource block sets contained in the resource pool, the target guard band overhead group is determined according to the number of frequency domain resources across resource block sets and allocated to the physical sidelink shared channel, and the guard band overhead indication provides one guard band overhead from the group. When the resource pool contains one RB set, the guard band overhead is 0. When the resource pool contains N (N > 1) RB sets, (N - 1) guard band overhead groups may be configured, pre-configured, or predefined. When the frequency domain resources allocated to the PSSCH cross two RB sets, a first guard band overhead group is used. When the frequency domain resources allocated to the PSSCH cross three RB sets, a second guard band overhead group is used. Similarly, when the frequency domain resources allocated to the PSSCH cross N RB sets, an (N - 1)-th guard band overhead group is used, and the guard band overhead indication provides one guard band overhead from the corresponding guard band overhead group.

For example, if the resource pool contains three RB sets, two guard band overhead groups may be configured, pre-configured, or predefined. The first guard band overhead group includes integers between 0 and 6, corresponding to the case where the frequency domain resources allocated to the PSSCH cross two RB sets, and the guard band overhead indication provides a value between 0 and 6; the second guard band overhead group includes values from 7 to 12, corresponding to the case where the frequency domain resources allocated to the PSSCH cross three RB sets, and the guard band overhead indication provides a value between 7 and 12.

In case two, the preset group number for the guard band overhead is determined according to the number of guard bands contained in the resource pool, and the target guard band overhead group is determined according to the number of frequency domain resources across resource block sets and allocated to the physical sidelink shared channel. The guard band overhead indication provides one guard band overhead in the group. When the resource pool does not contain the guard band, the guard band overhead is 0. When the resource pool contains M (M ≥ 1) guard bands, M guard band overhead groups may be configured, pre-configured, or predefined. When the frequency domain resources allocated to the PSSCH cross two RB sets, a first guard band overhead group is used. When the frequency domain resources allocated to the PSSCH cross three RB sets, a second guard band overhead group is used. Similarly, when the frequency domain resources allocated to the PSSCH cross (M + 1) RB sets, an M-th guard band overhead group is used, and the guard band overhead indication provides one guard band overhead from the corresponding guard band overhead group.

It should be noted that the method in which the guard band overhead indication information is used for indicating one guard band overhead in the target guard band overhead group among the preset group number of guard band overhead groups may be applied to the case where the subchannel in the resource pool contains the RB in the guard band. However, the applicability of the method to other cases is not excluded, such as when the subchannel in the resource pool does not contain the RB in the guard band, when the subchannel in the resource pool is allowed to contain the RB in the guard band, or when the subchannel in the resource pool is not allowed to contain the RB in the guard band.

In an embodiment, the frequency domain parameter indication information includes the indication information about whether to consider the guard band overhead, the guard band overhead is determined according to the indication information about whether to consider the guard band overhead, and the total number of REs allocated to the PSSCH is determined according to the determined guard band overhead.

In this embodiment, the indication information about whether to consider the guard band overhead may include 1-bit information, and the 1-bit information is used to indicate whether to consider the guard band overhead or not. For example, 0 indicates that the guard band overhead is not considered, and 1 indicates that the guard band overhead of M RBs is considered; alternatively, 0 indicates that the guard band overhead of M RBs is considered, and 1 indicates that the guard band overhead is not considered.

In this embodiment, in the case where the frequency domain parameter indication information includes the indication information about whether to consider the guard band overhead, the guard band overhead may be determined according to the indication information about whether to consider the guard band overhead, and the method for determining the total number of resource elements allocated to the physical sidelink shared channel according to the frequency domain parameter is as follows:

$$N_{RE} = N'_{RE} \cdot (n'_{PRB} - M) - N_{RE}^{SCI,1} - N_{RE}^{SCI,2}.$$

$N_{RE}$ denotes the total number of REs allocated to the PSSCH, M denotes the guard band overhead determined according to the indication about whether to consider the guard band overhead, $N'_{RE}$ denotes the number of REs allocated to the PSSCH in one PRB, $n'_{PRB}$ denotes the reference total number of PRBs, and $N_{RE}^{SCI,1}$ and $N_{RE}^{SCI,2}$ denote the numbers of REs occupied by the first-stage SCI and the second-stage SCI, respectively (the detailed meaning is as described above). $n'_{PRB}$ may be determined according to the total number of PRBs allocated to the PSSCH or according to the frequency domain unit size. M may be determined by any of configuration, pre-configuration, or pre-definition. If the indication information about whether to consider the guard band overhead indicates that the guard band overhead is not considered, M is set to 0.

In an embodiment, information included in the available additional resource indication information is given. The available additional resource indication information is used for indicating the number $N_{RB}^{addition}$ of additional resources available for the PSSCH (that is, available additional resources), and the available additional resource indication information may be provided by the PSCCH.

In this embodiment, the PSCCH provides the available additional resource indication information, and the method of determining the total number of REs allocated to the PSSCH according to the frequency domain parameter is as follows: The total number of REs allocated to the PSSCH is determined according to the available additional resources, the number of REs allocated to the PSSCH in one PRB, the reference total number of PRBs, and the number of REs occupied by the SCI, that is:

$$N_{RE} = N'_{RE} \cdot (n'_{PRB} + N_{RB}^{addition}) - N_{RE}^{SCI,1} - N_{RE}^{SCI,2}.$$

$N_{RB}^{addition}$ denotes the number of available additional resources, $N'_{RE}$ denotes the number of REs allocated to the PSSCH in one PRB, $n'_{PRB}$ denotes the reference total number of PRBs, $N_{RE}^{SCI,1}$ and $N_{RE}^{SCI,2}$ denote the numbers of REs occupied by the first-stage SCI and the second-stage SCI, respectively (the detailed meaning is as described above), and $N_{RE}$ denotes the total number of REs allocated to the PSSCH.

The guard band overhead indication information, the indication information about whether to consider the guard band overhead, the frequency domain unit size indication information, and the available additional resource indication information provided by the PSCCH may be used in combination with each other.

In an embodiment, the PSCCH provides the available additional resource indication information and the guard band overhead indication information, and the method of determining the total number of REs allocated to the PSSCH according to the frequency domain parameter is as follows: The total number of REs allocated to the PSSCH is determined according to the guard band overhead, the available additional resources, the number of REs allocated to the PSSCH in one PRB, the reference total number of PRBs, and the number of REs occupied by the SCI, that is:

$$N_{RE} = N'_{RE} \cdot (n'_{PRB} - N_{RB}^{GB} + N_{RB}^{addition}) - N_{RE}^{SCI,1} - N_{RE}^{SCI,2}.$$

In an embodiment, the PSCCH provides the indication information about whether to consider the guard band overhead and the available additional resource indication information, and the method of determining the total number of REs allocated to the PSSCH according to the frequency domain parameter is as follows: The total number of REs allocated to the PSSCH is determined according to the guard band overhead M determined by the indication information about whether to consider the guard band overhead, the number $N_{RB}^{addition}$ of available additional resources, the number of REs allocated to the PSSCH in one PRB, the reference total number of PRBs, and the number of REs occupied by the SCI, that is,

$$N_{RE} = N'_{RE} \cdot (n'_{PRB} - M + N_{RB}^{addition}) - N_{RE}^{SCI,1} - N_{RE}^{SCI,2}.$$

In an embodiment, the first indication information indicates that the frequency domain parameter indication information is not enabled, then the total number of REs allocated to the PSSCH is determined according to the reference total number $n'_{PRB}$ of PRBs, that is,

$$N_{RE} = N'_{RE} \cdot n'_{PRB} - N_{RE}^{SCI,1} - N_{RE}^{SCI,2}.$$

The reference total number $n'_{PRB}$ of PRBs is the total number of PRBs allocated to the PSSCH and may be determined according to the frequency domain unit size. The frequency domain unit size may be determined by configuration, pre-configuration, or pre-definition. It should be noted that the method of determining the reference total number of PRBs according to the frequency domain unit size may be one of the two methods in the following embodiments, which is not repeated in this embodiment.

In an embodiment, the frequency domain parameter indication information includes the frequency domain unit size indication information, the frequency domain unit size is determined according to the frequency domain unit size indication information or determined by at least one of configuration, pre-configuration, or pre-definition, and the reference total number of PRBs is determined according to the determined frequency domain unit size.

In this embodiment, the frequency domain unit size indication information is used for indicating the frequency domain unit size, and the method of determining the reference total number of PRBs according to the frequency domain unit size may include one of the following two manners:

In the first manner, the reference total number $n'_{PRB}$ of PRBs is determined according to the frequency domain unit size and the number of subchannels allocated to the PSSCH, that is,

$$n'_{PRB} = N_{subchannel} \cdot N_{RB}^{f\_unit}.$$

$N_{RB}^{f\_unit}$ denotes the frequency domain unit size, $N_{subchannel}$ denotes the number of subchannels allocated to the PSSCH, and $n'_{PRB}$ denotes the determined reference total number of PRBs. In this manner, the frequency domain unit size $N_{RB}^{f\_unit}$ is equivalent to the subchannel size.

In the second manner, the reference total number of PRBs is determined according to the frequency domain unit size, the number of subchannels allocated to the PSSCH, and the number of frequency domain units contained in the subchannel, that is,

$$n'_{PRB} = N_{subchannel} \cdot N_{f\_unit}^{subchannel} \cdot N_{RB}^{f\_unit}.$$

$N_{f\_unit}^{subchanel}$ denotes the number of frequency domain units contained in the subchannel.

In this embodiment, the subchannel may contain at least one resource block, and the subchannel may include consecutive resource blocks or non-consecutive resource blocks. The frequency domain unit includes at least one resource block, and the frequency domain unit may include consecutive resource blocks or non-consecutive resource blocks. The number of frequency domain units contained in the subchannel may be provided by configuration, pre-configuration, or pre-definition.

In an embodiment, the target overhead $N_x$ may also be considered when the total number of REs allocated to the PSSCH is determined. The target overhead $N_x$ includes the number of resource elements occupied by the target control information carried on the physical sidelink shared channel and/or the number of resource elements for rate matching on the physical sidelink shared channel (PSSCH). The target control information includes at least one of the following: hybrid automatic repeat request feedback information, channel occupancy time information, channel state information, beam report information, or beam configuration information.

In this embodiment, the total number of resource elements allocated to the physical sidelink shared channel is determined according to the frequency domain parameter and the target overhead, and it is necessary to subtract the target overhead $N_x$ from the total number of REs allocated to the PSSCH which is determined without considering the target overhead $N_x$.

For example, in the case where the frequency domain parameter indication information includes the guard band overhead indication information, the guard band overhead $N_{RB}^{GB}$ may be determined according to the guard band overhead indication information, and the method for determining the total number of resource elements allocated to the physical sidelink shared channel according to the frequency domain parameter and the target overhead may be as follows:

$$N_{RE} = N'_{RE} \cdot (n'_{PRB} - N_{RB}^{GB}) - N_{RE}^{SCI,1} - N_{RE}^{SCI,2} - N_x.$$

In the case where the frequency domain parameter indication information includes the indication information about whether to consider the guard band overhead, the guard band overhead $M$ may be determined according to the indication information about whether to consider the guard band overhead, and the method for determining the total number of REs allocated to the physical sidelink shared channel according to the frequency domain parameter and the target overhead may be as follows:

$$N_{RE} = N'_{RE} \cdot (n'_{PRB} - M) - N_{RE}^{SCI,1} - N_{RE}^{SCI,2} - N_x.$$

The frequency domain parameter indication information includes the available additional resource indication information, the number $N_{RB}^{addition}$ of available additional resources may be determined according to the available additional resource indication information, and the method for determining the total number of REs allocated to the PSSCH according to the frequency domain parameter and the target overhead may be as follows:

$$N_{RE} = N'_{RE} \cdot (n'_{PRB} + N_{RB}^{addition}) - N_{RE}^{SCI,1} - N_{RE}^{SCI,2} - N_x.$$

The frequency domain parameter indication information includes the available additional resource indication information and the guard band overhead indication information. The guard band overhead $N_{RB}^{GB}$ may be determined according to the guard band overhead indication information. The number $N_{RB}^{addition}$ of available additional resources may be determined according to the available additional resource indication information. The method for determining the total number of REs allocated to the PSSCH according to the frequency domain parameter and the target overhead may be as follows:

$$N_{RE} = N_{RE}^{'} \cdot (n_{PRB}^{'} - N_{RB}^{GB} + N_{RB}^{addition}) - N_{RE}^{SCI,1} - N_{RE}^{SCI,2} - N_x.$$

The frequency domain parameter indication information includes the indication information about whether to consider the guard band overhead and the available additional resource indication information. The guard band overhead *M* may be determined according to the indication information about whether to consider the guard band overhead. The number $N_{RB}^{addition}$ of available additional resources may be determined according to the available additional resource indication information. The method for determining the total number of REs allocated to the PSSCH according to the frequency domain parameter and the target overhead may be as follows:

$$N_{RE} = N_{RE}^{'} \cdot (n_{PRB}^{'} - M + N_{RB}^{addition}) - N_{RE}^{SCI,1} - N_{RE}^{SCI,2} - N_x.$$

The first indication information indicates that the frequency domain parameter indication information is not enabled, and the total number of REs allocated to the PSSCH is determined according to the reference total number $n_{PRB}^{'}$ of PRBs in the following formula:

$$N_{RE} = N_{RE}^{'} \cdot n_{PRB}^{'} - N_{RE}^{SCI,1} - N_{RE}^{SCI,2} - N_x.$$

In the present application, configuring certain information generally refers to a network or a base station configuring the information for a UE; pre-configuring certain information generally refers to other higher layer entities (such as the higher layer of a UE itself or other network entities) configuring the information for the UE.

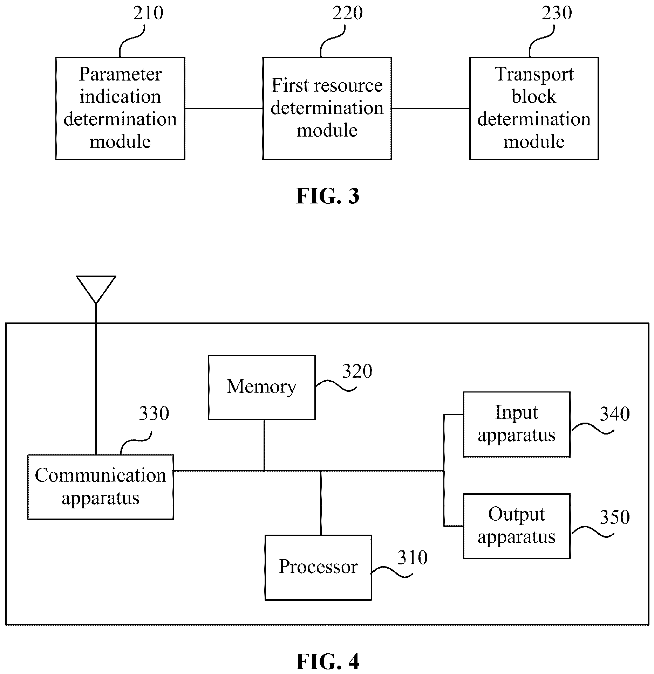

Embodiments of the present application also provide an apparatus for determining the size of a transport block. FIG. 3 is a diagram illustrating the structure of an apparatus for determining the size of a transport block according to an embodiment. As shown in FIG. 3, the apparatus for determining the size of a transport block includes a parameter indication determination module 210, a first resource determination module 220, and a transport block determination module 330.

The parameter indication determination module 210 is configured to determine frequency domain parameter indication information.

The first resource determination module 220 is configured to determine the total number of resource elements allocated to a physical sidelink shared channel according to the frequency domain parameter indication information.

The transport block determination module 230 is configured to determine the size of the transport block according to the total number of resource elements.

In an embodiment, the first resource determination module 220 includes a frequency domain parameter determination unit and a resource element determination unit.

The frequency domain parameter determination unit is configured to determine a frequency domain parameter according to the frequency domain parameter indication information.

The resource element determination unit is configured to determine the total number of resource elements allocated to the physical sidelink shared channel according to the frequency domain parameter.

In an embodiment, the resource element determining unit includes the following:

The total number of resource elements allocated to the physical sidelink shared channel is determined according to the frequency domain parameter and a target overhead.

The target overhead includes the number of resource elements occupied by target control information carried on the physical sidelink shared channel and/or the number of resource elements for rate matching on the physical sidelink shared channel (PSSCH).

The target control information includes at least one of the following: hybrid automatic repeat request feedback information, channel occupancy time information, channel state information, beam report information, or beam configuration information.

In an embodiment, the frequency domain parameter indication information includes at least one of the following: guard band overhead indication information, indication information about whether to consider a guard band overhead, frequency domain unit size indication information, or available additional resource indication information.

The frequency domain parameters include at least one of the following: a guard band overhead, a frequency domain unit size, or an available additional resource.

In an embodiment, the guard band overhead indication information is configured to indicate one guard band overhead in a configured guard band overhead group or indicate one guard band overhead in a target guard band overhead group among a preset group number of guard band overhead groups.

The target guard band overhead group is a group of guard band overheads determined from the preset group number of guard band overhead groups according to the number of frequency domain resources across resource block sets and allocated to the physical sidelink shared channel.

The preset group number is determined according to the number of resource block sets contained in a resource pool or the number of guard bands contained in the resource pool.

In an embodiment, the frequency domain parameter determination unit includes at least one of a first guard band overhead determination subunit, a second guard band overhead determination subunit, a frequency domain unit size determination subunit, or an available additional resource determination subunit.

The first guard band overhead determination subunit is configured to determine the guard band overhead according to the guard band overhead indication information.

The second guard band overhead determination subunit is configured to determine the guard band overhead by a preset method if the indication information about whether to consider the guard band overhead indicates that the guard band overhead is considered; the second guard band overhead determination subunit is configured to determine the number of guard band overheads as zero if the indication information about whether to consider the guard band overhead indicates that the guard band overhead is not considered.

The frequency domain unit size determination subunit is configured to determine the frequency domain unit size according to the frequency domain unit size indication information.

The available additional resource determination subunit is configured to determine the available additional resource according to the available additional resource indication information.

In an embodiment, the first guard band overhead determination subunit includes any one of the following: determining the guard band overhead according to a value indicated by the guard band overhead indication information; determining the guard band overhead according to the guard band overhead indication information and whether a subchannel in a resource pool contains a resource block in a guard band; or determining the guard band overhead according to the guard band overhead indication information and whether the number of resource blocks contained in a subchannel in a resource pool exceeds a threshold.

In an embodiment, the parameter indication determination module 310 includes determining the frequency domain parameter indication information provided by sidelink control information.

The sidelink control information is first-stage sidelink control information carried on a physical sidelink control channel or second-stage sidelink control information carried on the physical sidelink shared channel.

In an embodiment, the apparatus also includes a first indication determination module.

The first indication determination module is configured to determine first indication information by a preset method, and the first indication information is configured to indicate whether the frequency domain parameter indication information is enabled.

In an embodiment, the apparatus also includes an enable indication module.

The enable indication module is configured to perform at least one of the following:

In the case where the first indication information indicates that the frequency domain parameter indication information is enabled, the sidelink control information includes the frequency domain parameter indication information.

In the case where the first indication information indicates that the frequency domain parameter indication information is not enabled, the sidelink control information does not include the frequency domain parameter indication information.

In an embodiment, the apparatus also includes a second resource determination module.

The second resource determination module is configured to determine the total number of resource elements allocated to the physical sidelink shared channel by using any one of the following methods in the case where the first indication information indicates that the frequency domain parameter indication information is not enabled:

A frequency domain parameter is determined by a preset method, and the total number of resource elements allocated to the physical sidelink shared channel is determined according to the frequency domain parameter.

Alternatively, the total number of resource elements allocated to the physical sidelink shared channel is determined according to a total number of physical resource blocks allocated to the physical sidelink shared channel.

In an embodiment, the apparatus also includes a second indication determination module.

The second indication determination module is configured to determine second indication information by a preset method; the second indication information is configured to indicate whether the use of a resource block in a guard band is allowed.

In an embodiment, in the case where a subchannel is not allowed to contain a resource block in a guard band, the apparatus also includes an allowance indication module.

The allowance indication module is configured to perform at least one of the following:

In the case where the second indication information indicates that the use of the resource block in the guard band is not allowed, the available additional resource is set to zero.

In the case where the second indication information indicates that the use of the resource block in the guard band is allowed, the available additional resource is determined according to the frequency domain parameter indication information or a preset method.

In an embodiment, in the case where a subchannel is not allowed to contain a resource block in a guard band, the apparatus also includes a first configuration module.

The first configuration module is configured to perform at least one of the following:

The guard band overhead is set to zero, or the frequency domain unit size is determined according to the frequency domain parameter indication information or a preset method.

In an embodiment, in the case where a subchannel is allowed to contain a resource block in a guard band, the apparatus also includes a second configuration module.

The second configuration module is configured to perform at least one of the following:

The guard band overhead is determined according to the frequency domain parameter indication information or a preset method, or the available additional resource is set to zero.

In an embodiment, the preset method includes at least one of the following: pre-definition, configuration through higher layer signaling, or configuration by a higher layer entity.

In an embodiment, the granularity of the configuration or the configuration includes a carrier, a bandwidth part, or a resource pool.

In an embodiment, the transport block determination module 330 includes the following:

The size of the transport block is determined according to the total number of resource elements and a channel parameter of the physical sidelink shared channel.

The channel parameter includes at least one of the following: the target code rate, a modulation order, and the number of transmission layers.

The apparatus for determining the size of a transport block according to this embodiment and the method for determining the size of a transport block according to the preceding embodiments belong to the same concept. For technical details not described in detail in this embodiment, reference may be made to any one of the preceding embodiments. The embodiment has the same beneficial effects as the applied method for determining the size of a transport block.

An embodiment of the present application also provides a user equipment. FIG. 4 is a diagram illustrating the hardware structure of a user equipment according to an embodiment. As shown in FIG. 4, the user equipment provided by the present application includes a memory 320, a processor 310, and a computer program stored on the memory 320 and executable on the processor 310. The processor 310, when executing the program, implements the preceding method for determining the size of a transport block.

The user equipment may also include the memory 320. One or more processors 310 may be provided in the user equipment, and one processor 310 is used as an example in FIG. 4. The memory 320 is configured to store one or more programs. When executed by the one or more processors 310, the one or more programs cause the one or more processors 310 to implement the method for determining the size of a transport block described in the embodiments of the present application.

The user equipment also includes a communication apparatus 330, an input apparatus 340, and an output apparatus 350.

The one or more processors 310, the memory 320, the communication apparatus 330, the input apparatus 340, and the output apparatus 350 that are in the user equipment may be connected through a bus or in other manners. In FIG. 4, the connection through the bus is taken as an example.

The input apparatus 340 may be configured to receive inputted digital or character information and generate key signal input related to user settings and function control of the user equipment. The output apparatus 350 may include a display device such as a display screen.

The communication apparatus 330 may include a receiver and a sender. The communication apparatus 330 is configured to perform information transceiving and communication under the control of the one or more processors 310.

As a computer-readable storage medium, the memory 320 may be configured to store software programs, computer-executable programs, and modules, such as program instructions/modules (for example, the parameter indication determination module 210, the first resource determination module 220, and the transport block determination module 230) corresponding to the method for determining the size of a transport block according to the embodiments of the present application. The memory 320 may include a program storage region and a data storage region. The program storage region may store an operating system and an application program required by at least one function. The data storage region may store data created depending on the use of a user equipment. In addition, the memory 320 may include a high-speed random-access memory and a nonvolatile memory, such as at least one disk memory, a flash memory, or other nonvolatile solid-state memories. In some examples, the memory 320 may also include memories located remotely relative to the processor 310, and these remote memories may be connected to the user equipment via a network. Examples of the preceding network include but are not limited to, the Internet, an intranet, a local area network, a mobile communication network, and a combination thereof.

An embodiment of the present application provides a storage medium. The storage medium stores a computer program that, when executed by a processor, causes the processor to perform the method for determining the size of a transport block according to any embodiment of the present application.

In embodiments of the present application, the method for determining the size of a transport block includes the following:

Frequency domain parameter indication information is determined.

The total number of resource elements allocated to a physical sidelink shared channel is determined according to the frequency domain parameter indication information.

The size of the transport block is determined according to the total number of resource elements.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. More specific examples of the computer-readable storage medium include (non-exhaustive list) an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet by an Internet service provider).

The above descriptions are only example embodiments of the present application and are not intended to limit the scope of the present application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), and an optical memory apparatus and system (a digital video disc (DVD) or a compact disk (CD)). Computer-readable medium may include a non-transitory storage medium. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1. A method for determining a size of a transport block, comprising:

   determining frequency domain parameter indication information;
   determining a total number of resource elements allocated to a physical sidelink shared channel according to the frequency domain parameter indication information; and
   determining the size of the transport block according to the total number of resource elements.

2. The method for determining the size of the transport block according to claim 1, wherein determining the total number of resource elements allocated to the physical sidelink shared channel according to the frequency domain parameter indication information comprises:

   determining a frequency domain parameter according to the frequency domain parameter indication information; and
   determining the total number of resource elements allocated to the physical sidelink shared channel according to the frequency domain parameter.

3. The method for determining the size of the transport block according to claim 2, wherein determining the total number of resource elements allocated to the physical sidelink shared channel according to the frequency domain parameter comprises:

   determining the total number of resource elements allocated to the physical sidelink shared channel according to the frequency domain parameter and a target overhead;
   wherein the target overhead comprises at least one of the following: a number of resource elements occupied by target control information carried on the physical sidelink shared channel or a number of resource elements for rate matching on the physical sidelink shared channel; and
   the target control information comprises at least one of the following: hybrid automatic repeat request, HARQ, feedback information, channel occupancy time information, channel state information, beam report information, or beam configuration information.

4. The method for determining the size of the transport block according to claim 2, wherein the frequency domain parameter indication information comprises at least one of the following:

   guard band overhead indication information, indication information about whether to consider a guard band overhead, frequency domain unit size indication information, or available additional resource indication information; and
   the frequency domain parameter comprises at least one of the following:
   a guard band overhead, a frequency domain unit size, or an available additional resource.

5. The method for determining the size of the transport block according to claim 4, wherein the guard band overhead indication information is configured to:

   indicate one guard band overhead in a configured guard band overhead group, or indicate one guard band overhead in a target guard band overhead group among a preset group number of guard band overhead groups;
   wherein the target group of guard band overheads is one group of guard band overheads determined from the preset group number of guard band overhead groups according to a number of frequency domain resources across resource block sets and allocated to the physical sidelink shared channel; and
the preset group number is determined according to a number of resource block sets contained in a resource pool or a number of guard bands contained in a resource pool.

6. The method for determining the size of the transport block according to claim 4, wherein determining the frequency domain parameter according to the frequency domain parameter indication information comprises at least one of the following:

determining the guard band overhead according to the guard band overhead indication information;
in response to the indication information about whether to consider the guard band overhead indicating that the guard band overhead is considered, determining the guard band overhead by a preset method; or in response to the indication information about whether to consider the guard band overhead indicating that the guard band overhead is not considered, determining the guard band overhead as zero;
determining the frequency domain unit size according to the frequency domain unit size indication information; or determining the available additional resource according to the available additional resource indication information.

7. The method for determining the size of the transport block according to claim 6, wherein determining the guard band overhead according to the guard band overhead indication information comprises any one of the following:

determining the guard band overhead according to a value indicated by the guard band overhead indication information;
determining the guard band overhead according to the guard band overhead indication information and whether a subchannel in a resource pool contains a resource block in a guard band; or
determining the guard band overhead according to the guard band overhead indication information and whether a number of resource blocks contained in a subchannel in a resource pool exceeds a threshold.

8. The method for determining the size of the transport block according to claim 1, wherein determining the frequency domain parameter indication information comprises:

determining the frequency domain parameter indication information provided by sidelink control information;
wherein the sidelink control information is first-stage sidelink control information carried on a physical sidelink control channel or second-stage sidelink control information carried on the physical sidelink shared channel.

9. The method for determining the size of the transport block according to claim 8, further comprising:

determining first indication information by a preset method, wherein the first indication information is configured to indicate whether the frequency domain parameter indication information is enabled.

10. The method for determining the size of the transport block according to claim 9, further comprising at least one of the following:

in a case where the first indication information indicates that the frequency domain parameter indication information is enabled, the sidelink control information comprises the frequency domain parameter indication information; or
in a case where the first indication information indicates that the frequency domain parameter indication information is not enabled, the sidelink control information does not comprise the frequency domain parameter indication information.

11. The method for determining the size of the transport block according to claim 9, further comprising:
in a case where the first indication information indicates that the frequency domain parameter indication information is not enabled, determining the total number of resource elements allocated to the physical sidelink shared channel by using any one of the following methods:

determining a frequency domain parameter by a preset method, and determining the total number of resource elements allocated to the physical sidelink shared channel according to the frequency domain parameter; or
determining the total number of resource elements allocated to the physical sidelink shared channel according to a total number of physical resource blocks allocated to the physical sidelink shared channel.

12. The method for determining the size of the transport block according to claim 1, further comprising:
    determining second indication information by a preset method; wherein the second indication information is configured to indicate whether use of a resource block in a guard band is allowed.

13. The method for determining the size of the transport block according to claim 12, wherein in a case where a subchannel is not allowed to contain the resource block in the guard band, the method further comprises at least one of the following:

    in a case where the second indication information indicates that the use of the resource block in the guard band is not allowed, setting a number of available additional resources to zero; or
    in a case where the second indication information indicates that the use of the resource block in the guard band is allowed, determining an available additional resource according to the frequency domain parameter indication information or a preset method.

14. The method for determining the size of the transport block according to claim 1, wherein in a case where a subchannel is not allowed to contain a resource block in a guard band, the method further comprises at least one of the following:

    setting a guard band overhead to zero; or
    determining a frequency domain unit size according to the frequency domain parameter indication information or a preset method.

15. The method for determining the size of the transport block according to claim 1, wherein in a case where a subchannel is allowed to contain a resource block in a guard band, the method further comprises at least one of the following:

    determining a guard band overhead according to the frequency domain parameter indication information or a preset method; or
    setting a number of available additional resources to zero.

16. The method for determining the size of the transport block according to any one of claims 6 to 7 or 9 to 15, wherein the preset method comprises at least one of the following:
    pre-definition, configuration through higher layer signaling, or pre-configuration by a higher layer entity.

17. The method for determining the size of the transport block according to claim 16, wherein a granularity of the configuration or the pre-configuration comprises: a carrier, a bandwidth part, or a resource pool.

18. The method for determining the size of the transport block according to claim 1, wherein determining the size of the transport block according to the total number of resource elements comprises:

    determining the size of the transport block according to the total number of resource elements and a channel parameter of the physical sidelink shared channel;
    wherein the channel parameter comprises at least one of the following: a target code rate, a modulation order, and a number of transmission layers.

19. A user equipment, comprising:
    a memory, a processor, and a computer program stored in the memory and executable by the processor, wherein when executing the computer program, the processor performs the method for determining the size of the transport block according to any one of claims 1 to 18.

20. A storage medium storing a computer program which, when executed by a processor, causes the processor to perform the method for determining the size of the transport block according to any one of claims 1 to 18.

EP 4 525 390 A1

Carrier

| Resource block set 0 (RB set0) | GB0 | Resource block set 1 (RB set 1) | GB1 | Resource block set 2 (RB set 2) | GB2 | Resource block set 3 (RB set 3) |

...    ...    ...    ...

Resource pool

Bandwidth part

**FIG. 1**

| Determine frequency domain parameter indication information | 110 |

| Determine a total number of resource elements allocated to a physical sidelink shared channel according to the frequency domain parameter indication information | 120 |

| Determine the size of the transport block according to the total number of resource elements | 130 |

**FIG. 2**

210

220

230

| Parameter indication determination module | | First resource determination module | | Transport block determination module |

**FIG. 3**

Memory 320

330

Input apparatus 340

Communication apparatus

Output apparatus 350

Processor 310

**FIG. 4**

## INTERNATIONAL SEARCH REPORT

| | International application No. |
|---|---|
| | **PCT/CN2023/105716** |

**A. CLASSIFICATION OF SUBJECT MATTER**

H04L41/0896(2022.01)i

According to International Patent Classification (IPC) or to both national classification and IPC

**B. FIELDS SEARCHED**

Minimum documentation searched (classification system followed by classification symbols)

IPC: H04L, H04W, H04Q

Documentation searched other than minimum documentation to the extent that such documents are included in the fields searched

Electronic data base consulted during the international search (name of data base and, where practicable, search terms used)

CNABS, CNTXT, ENTXT, ENTXTC, VEN, 3GPP: 边, 侧, 副, 旁, 链路, 共享信道, 资源元素, 资源单元, 数, 传输块, 大小, 尺寸, 保护, 带, 频, 开销, 频域, 频率, 波束, sidelink, SL, D2D, PC5, PSSCH, RE, number, TB, size, length, TBS, guard band, GB, frequency, beam

**C. DOCUMENTS CONSIDERED TO BE RELEVANT**

| Category* | Citation of document, with indication, where appropriate, of the relevant passages | Relevant to claim No. |
|---|---|---|
| PX | CN 115987800 A (ZTE CORP.) 18 April 2023 (2023-04-18) claims 1-20 | 1-20 |
| X | CN 111263454 A (SPREADTRUM COMMUNICATIONS (SHANGHAI) CO., LTD.) 09 June 2020 (2020-06-09) description, paragraphs [0003]-[0042] | 1-4, 8-11, 16-20 |
| X | US 2021321403 A1 (APPLE INC.) 14 October 2021 (2021-10-14) description, paragraphs [0015]-[0070] | 1-4, 8-11, 16-20 |
| A | CN 111148261 A (VIVO COMMUNICATION TECHNOLOGY CO., LTD.) 12 May 2020 (2020-05-12) entire document | 1-20 |
| A | NOKIA et al. "Alignment of RRC parameter names for 38.214" *3GPP TSG-RAN WG1 Meeting #103-e R1-2009778*, 13 November 2020 (2020-11-13), entire document | 1-20 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2023** | **15 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/105716**

| Patent document cited in search report | | | Publication date (day/month/year) | Patent family member(s) | | | Publication date (day/month/year) |
|---|---|---|---|---|---|---|---|
| CN | 115987800 | A | 18 April 2023 | None | | | |
| CN | 111263454 | A | 09 June 2020 | None | | | |
| US | 2021321403 | A1 | 14 October 2021 | US | 2023132263 | A1 | 27 April 2023 |
| | | | | KR | 20210125437 | A | 18 October 2021 |
| | | | | CN | 113497675 | A | 12 October 2021 |
| CN | 111148261 | A | 12 May 2020 | KR | 20210084608 | A | 07 July 2021 |
| | | | | JP | 2022512835 | A | 07 February 2022 |
| | | | | EP | 3876645 | A1 | 08 September 2021 |
| | | | | WO | 2020088387 | A1 | 07 May 2020 |
| | | | | US | 2021251005 | A1 | 12 August 2021 |

Form PCT/ISA/210 (patent family annex) (July 2022)